# EUROPÄISCHE PATENTSCHRIFT

(11) **EP 3 023 670 B1**
(45) Veröffentlichungstag und Bekanntmachung des Hinweises auf die Patenterteilung: **23.08.2017**
(21) Anmeldenummer: 15194730.6
(22) Anmeldetag: 16.11.2015
(51) Int. Cl.: F16H 7/12, F02B 67/06

(54) **RIEMENSPANNVORRICHTUNG**
BELT TENSIONING DEVICE
DISPOSITIF DE TENSION DE COURROIE

(30) Priorität: 21.11.2014 DE 102014117094
(43) Veröffentlichungstag der Anmeldung: 25.05.2016
(73) Patentinhaber: Muhr und Bender KG, 57439 Attendorn (DE)
(72) Erfinder: Pfeifer, Simon, 58840 Plettenberg (DE); Jud, Joachim, 57567 Daaden (DE); Schattenberg, Stefan, 57439 Attendorn (DE); Rüenauver, Jan, 57439 Attendorn (DE)
(74) Vertreter: Neumann Müller Oberwalleney & Partner Patentanwälte

(56) Entgegenhaltungen:
- EP-A1- 2 778 472
- EP-A2- 2 128 489
- US-A- 4 758 208

## Beschreibung

Die Erfindung betrifft eine Riemenspannvorrichtung für einen riemengetriebenen Starter-Generator. Ein Riementrieb umfasst üblicherweise einen endlosen Riemen und zumindest zwei Riemenscheiben, von denen eine als Antrieb und eine als Abtrieb des Riementriebs fungieren kann. Derartige Riementriebe kommen insbesondere an Verbrennungsmotoren eines Kraftfahrzeugs zum Antreiben von Nebenaggregaten zum Einsatz, wobei eine erste Riemenscheibe auf der Kurbelwelle des Verbrennungsmotors sitzt und den Riemen antreibt. Weitere Riemenscheiben sind den Nebenaggregaten zugeordnet, wie beispielsweise Wasserpumpe, Lichtmaschine oder Klimaanlagenkompressor, und werden vom Riemenantrieb drehend angetrieben. Bei herkömmlichen Riementrieben sind die Nebenaggregate als Verbraucher ausgelegt, das heißt sie werden von der Riemenscheibe der Kurbelwelle über den Riemen angetrieben. Dabei ist zwischen der Kurbelwelle und dem in Umlaufrichtung des Riemens benachbarten Aggregat, in der Regel der Generator, das Lostrum ausgebildet. Um hier eine ausreichende Umschlingung des Riemens um die Riemenscheibe zu gewährleisten, wird der Riemen mittels einer Spannrolle der Riemenspannvorrichtung vorgespannt.

Aus der DE 10 2011 053 869 A1 ist eine Riemenspannvorrichtung mit genau einem Spannarm bekannt, der über eine Schraubenfeder gegenüber dem Grundkörper in Umfangsrichtung abgestützt ist.

Es sind auch Riementriebe bekannt, bei denen als weiteres Nebenaggregat ein Startergenerator in den Riementrieb integriert ist, das heißt ein Elektromotor, der je nach Betriebszustand als Starter (Anlasser) oder Lichtmaschine (Generator) betrieben werden kann. Bei solchen Riementrieben mit Startergenerator als Nebenaggregat, findet zwischen Motorbetrieb einerseits und Anlasserbetrieb andererseits ein Wechsel zwischen Zugtrum und Lostrum zu beiden Seiten der Riemenscheibe des Startergenerators statt. Es ist demnach erforderlich, federbelastete Spannrollen für beide der genannten Trums vorzusehen, von denen jeweils eine am Lostrum unter Federkraft wirksam wird, während die andere vom gespannten Zugtrum zurückgedrängt wird.

Aus der DE 2013 102 562 A1 ist eine solche Riemenspannvorrichtung mit zwei Spannarmen bekannt, die über eine Feder in Umfangsrichtung gegeneinander abgestützt sind. Die Feder hat eine Anzahl von mindestens 1,25 und maximal 2,5 Windungen.

Aus der EP 2 128 489 A2 ist eine Riemenspannvorrichtung für einen Riementrieb mit Starter-Generator gemäß dem Oberbegriff des Anspruchs 1 bekannt. Die Riemenspannvorrichtung weist ein Gehäuse auf, in dem zwei Spannarme um eine gemeinsame Schwenkachse schwenkbar gelagert sind. Die Spannarme sind mit Federmitteln gegeneinander abgestützt. Das Gehäuse ist bei an den Starter-Generator montierter Antriebsriemenscheibe dadurch montierbar, dass das Gehäuse in einem die Antriebswelle des Starter-Generators umgebenden Ringbereich berührungsfrei gegenüber dem Starter-Generator ist.

Die Bauraumverfügbarkeit um die Generatorachse sowie vor und hinter der Riemenebene ist insbesondere für zwei Spannvorrichtungen oder Doppelarmspanner begrenzt. Außerdem ist das Auflegen des Riemens, nicht zuletzt aufgrund der Bauraumverhältnisse, schwierig. Je nach Ausgestaltung des Riemenspanners können sich hohe Drehmomente auf den Riemenspanner wirkende Drehmomente ergeben, welche zu einem erhöhten Verschleiß führen können. Außerdem ist der Aufwand zur Herstellung der Feder für den Riemenspanner sehr aufwändig.

Der vorliegenden Erfindung liegt die Aufgabe zugrunde, eine Riemenspannvorrichtung vorzuschlagen, die insbesondere hinsichtlich des axialen Bauraums vor und hinter der Riemenebene kompakt baut, einfach herstellbar und gut montierbar ist. Weiter soll eine Aggregatanordnung mit einer solchen Riemenspannvorrichtung vorgeschlagen werden, die einen kompakten Aufbau hat, einfach montierbar ist und mit der im Übrigen die obengenannten Nachteile vermieden werden können.

Die Lösung besteht in einer Riemenspannvorrichtung umfassend: einen Grundkörper, der einen Befestigungsabschnitt zum Befestigen an einem Aggregat aufweist, sowie eine Öffnung für eine Antriebswelle des Aggregats; einen ersten Spannarm, der mittels eines ersten Lagers an dem Grundkörper um eine erste Schwenkachse schwenkbar gelagert ist und eine erste Spannrolle aufweist, die um eine erste Drehachse drehbar ist; einen zweiten Spannarm, der mittels eines zweiten Lagers an dem Grundkörper um eine zweite Schwenkachse schwenkbar gelagert ist und eine zweite Spannrolle aufweist, die um eine zweite Drehachse drehbar ist; eine Federanordnung, welche derart zwischen dem ersten Spannarm und dem zweiten Spannarm angeordnet ist, dass der erste Spannarm und der zweite Spannarm mittels der Federanordnung in Umfangsrichtung gegeneinander vorgespannt sind; wobei die Federanordnung zumindest eine Bügelfeder aufweist, die eine Umfangserstreckung von weniger als 360° um die erste und zweite Schwenkachse aufweist und eine axiale Gesamtlänge hat, wobei die zumindest eine Bügelfeder einen ersten Stützabschnitt aufweist, der an dem ersten Spannarm abgestützt ist, und einen zweiten Stützabschnitt, der an dem zweiten Spannarm abgestützt ist, sowie einen sich zwischen dem ersten Stützabschnitt und dem zweiten Stützabschnitt erstreckenden Federabschnitt; wobei die zumindest eine Bügelfeder im Bereich des ersten und zweiten Stützabschnitts eine axiale Länge aufweist, die kürzer ist als die axiale Gesamtlänge der Bügelfeder.

Ein Vorteil besteht darin, dass die Riemenspannvorrichtung aufgrund der Ausgestaltung der Bügelfeder mit kurzer axialer Länge im Bereich der Spannrollen einen besonders flachen Aufbau in axialer Richtung hat. Die Federanordnung weist in den Umfangsabschnitten, in denen die Spannrollen angeordnet sind, beziehungsweise, in denen die Federanordnung an den Spannrollen abgestützt ist, eine minimale axiale Bauhöhe auf, die im Extremfall sogar kleiner oder gleich dem größten Drahtdurchmesser des Federdrahts sein kann. Auf diese Weise kann die Krafteinleitung von der Bügelfeder auf die beiden Spannarme in einer Ebene erfolgen, die axial zwischen einer Befestigungsebene des Gehäuses und einer dem Gehäuse zugewandten Kante der Spannrollen angeordnet werden. Die genannte axiale Länge im Bereich der Stützabschnitte beziehungsweise die axiale Gesamtlänge können sich auf eine Federachse beziehen, um welche die Feder gewunden ist, und/oder in eingebautem Zustand auf eine Schwenkachse der Spannarme.

Die Riemenspannvorrichtung kann für einen Riementrieb verwendet werden, der zumindest ein Aggregat mit einer Antriebswelle und einer Riemenscheibe sowie einen endlosen Riemen zum Antreiben der Riemenscheibe aufweist. Die Riemenspannvorrichtung ist insbesondere so gestaltet, dass die beiden Schwenkachsen der Spannarme innerhalb der Öffnung des Gehäuses liegen. In eingebautem Zustand der Riemenspannvorrichtung an dem Aggregat liegen die beiden Schwenkachsen vorzugsweise innerhalb eines größten Außendurchmessers der Riemenscheibe beziehungsweise der Antriebswelle, insbesondere koaxial hierzu. Die beiden Schwenkachsen können koaxial zueinander angeordnet sein, das heißt eine gemeinsame Schwenkachse bilden.

Nach einer bevorzugten Ausgestaltung ist die Federanordnung in Axialansicht spiegelsymmetrisch zu einer Mittelebene gestaltet, welche mittig parallel zwischen den beiden Drehachsen der Spannrollen verläuft. Die Federanordnung weist mindestens eine Bügelfeder auf, womit gemeint ist, dass eine oder mehrere Bügelfedern vorgesehen sein können. Sofern vorliegend von einer oder der Bügelfeder die Rede ist, ist diessofern nichts anderes gesagt ist - für die zumindest eine Bügelfeder gemeint, das heißt, dass die beschriebenen Merkmale für eine, mehrere oder alle der Bügelfedern gelten können. Dies soll auch für andere Bauteile der Riemenspannvorrichtung gelten, von denen mehrere vorhanden sind und die hier beschrieben werden, insbesondere die Spannrollen, Spannarme, und Teile hiervon.

Die Bügelfeder hat weniger als eine Windung, das heißt sie erstreckt sich im Einbauzustand über eine Umfangserstreckung um die Schwenkachsen der Spannarme von weniger als 360°, insbesondere von weniger als 330°. Die Bügelfeder hat an ihren Enden jeweils einen Stützabschnitt, mit dem die Feder an dem jeweiligen Spannarm in Umfangsrichtung abgestützt ist, um die beiden Spannarme gegeneinander zu beaufschlagen. Die Stützabschnitte können bogenförmig gestaltet sein und in einer entsprechenden Umfangsnut an dem Spannarm einsitzen, so dass die Feder in axialer Richtung und in Umfangsrichtung durch die Aufnahme in den beiden Umfangsnuten der beiden Spannarme fixiert ist. Zwischen den beiden Stützabschnitten liegt der Federabschnitt, in dem beim elastischen Aufweiten der Feder potentielle Energie gespeichert wird. Der Federabschnitt, welcher auch als Bügelabschnitt bezeichnet werden kann, wird beim elastischen Aufweiten insbesondere auf Biegung beansprucht. Der Federabschnitt erstreckt sich zwischen den beiden Endabschnitten etwa kreisbogenförmig in Umfangsrichtung um eine Federachse, die im Einbauzustand etwa in der Nähe und im Wesentlichen parallel zu den Schwenkachsen der beiden Spannarme liegt. Dabei ist ein mittlerer Radius des Federabschnitts größer als ein mittlerer Radius des ersten und zweiten Lagers, insbesondere größer als ein die Öffnung umgebender ringförmiger Teil der Riemenspannvorrichtung, so dass zwischen letzterem und dem Federabschnitt ein radialer Spalt gebildet ist. Im entspannten Zustand kann die Feder einen mittleren Radius aufweisen, der kleiner ist als ein Achsabstand zwischen einer Schwenkachse der Spannarme und einer Drehachse der Spannrolle. Im Einbauzustand kann die Bügelfeder einen mittleren Radius aufweisen, der größer ist als der Achsabstand zwischen der Schwenkachse und der Drehachse. Ein zwischen den beiden Spannarmen eingeschlossener Winkel hängt von der individuellen Einbausituation an dem Aggregat ab und kann im Einbauzustand kleiner als 90° sein. Die zumindest eine Bügelfeder kann aus Runddraht oder Rechteckdraht hergestellt sein.

Nach einer ersten Möglichkeit kann die Bügelfeder so gestaltet sein, dass der Drahtquerschnitt entlang der Umfangserstreckung der Bügelfeder konstant ist. In diesem Fall ist insbesondere vorgesehen, dass zumindest ein Teilbereich des Federabschnitts relativ zum ersten und zweiten Stützabschnitt in Richtung einer von der ersten und zweiten Spannrolle aufgespannten Mittelebene axial versetzt ist. Dies kann dadurch bewerkstelligt werden, dass der Federabschnitt einen Steigungsbereich mit einer axialen Steigungskomponente entlang der Umfangserstreckung der Bügelfeder aufweist. Hiermit wird erreicht, dass ein zwischen der Bügelfeder und einer Befestigungsebene des Gehäuses gebildeter axialer Abstand ausgehend von einem Endabschnitt der Feder entlang des Bügelabschnitts in Richtung zum anderen Endabschnitt zunimmt. Ein maximaler axialer Abstand kann in einem mittleren Teilbereich des Bügelabschnitts gebildet sein. Die axiale Steigung kann sich über einen Teilbereich erstrecken, während ein zweiter Teilbereich steigungslos ausgestaltet ist, oder über die gesamte Umfangserstreckung des Bügelabschnitts.

Nach einer zweiten Möglichkeit kann die zumindest eine Bügelfeder im ersten und zweiten Stützabschnitt eine geringere axiale Länge aufweisen als in zumindest einem Teilbereich des Federabschnitts. Dies kann so realisiert werden, dass die Bügelfeder aus Flachmaterial hergestellt wird, wobei die Endabschnitte des Flachmaterials, welche im Einbauzustand die Spannarme beaufschlagen, dünner ausgeführt werden als der dazwischenliegende Bügelabschnitt. Mit Flachmaterial ist in diesem Zusammenhang insbesondere ein Blechstreifen mit einem rechteckigen Querschnitt gemeint, der zur Bügelfeder umgeformt ist.

Für beide Möglichkeiten gilt vorzugsweise, dass je Spannarm ein Stützelement vorgesehen ist, an dem sich der zugehörige Stützabschnitt der Bügelfeder abstützt, um die beiden Spannarme aufeinander zu zu beaufschlagen. Die Stützelemente können für den bogenförmigen Endabschnitt der Feder eine sich in Umfangsrichtung um die Drehachse der Spannrolle erstreckende Nut aufweisen, in welcher der jeweilige Endabschnitt formschlüssig aufgenommen ist. Insofern können die Stützelemente, welche mit dem jeweiligen Spannarm fest verbunden sind, auch als Aufnahmeelemente bezeichnet werden. Durch den formschlüssigen Eingriff der Endabschnitte der Feder in den beiden Stützabschnitten wird die Feder in axiale Richtung und in Umfangsrichtung fixiert. Weitere Befestigungsmittel für die Feder sind nicht erforderlich.

Nach einer Ausführungsform, welche insbesondere für die erste Möglichkeit gilt, kann die Federanordnung zwei Bügelfedern aufweisen, welche mittels zumindest einem Befestigungselement miteinander verbunden sind. Mit der Ausgestaltung mit zwei Bügelfedern kann die auf die Spannarme wirkende Vorspannkraft erhöht werden. Die beiden Bügelfedern sind funktional parallel zwischen den beiden Spannarmen angeordnet, das heißt beide Federn beaufschlagen mit ihren ersten Endabschnitten den ersten Spannarm und mit ihren zweiten Endabschnitten den zweiten Spannarm. Bei dieser Ausführung mit zwei Federn haben die Stützelemente jeweils zwei Nuten zur Aufnahme der Endabschnitte der beiden Federn. Die beiden Bügelfedern können untereinander gleich gestaltet und axial versetzt zueinander angeordnet sein. Alternativ können die beiden Bügelfedern unterschiedlich gestaltet sein. Bei dieser Ausführung liegen die ersten und zweiten Stützabschnitte der zwei Bügelfedern vorzugsweise in einer gemeinsamen Ebene, wohingegen die Federabschnitte der beiden Bügelfedern zumindest in Teilbereichen axial versetzt zueinander angeordnet sind, das heißt in unterschiedlichen Ebenen liegen. Es ist insbesondere vorgesehen, dass mittlere Radien der Federabschnitte der beiden Bügelfedern gleich groß sind, und mittlere Radien der Stützabschnitte der beiden Bügelfedern unterschiedlich groß sind. Hiermit wird erreicht, dass die Federabschnitte der beiden Bügelfedern zueinander axial versetzt und in radialer Überdeckung sind, während die Stützabschnitte der beiden Bügelfedern zueinander radial versetzt und in axialer Überdeckung sind.

Nach einer bevorzugten Ausgestaltung, die für alle der oben genannten Ausführungsformen gilt, ist zumindest eines der Teile Grundkörper, erster Spannarm und zweiter Spannarm als Blechumformteil aus Stahlblech hergestellt. Die Herstellung des Grundkörpers beziehungsweise der Spannarme aus Stahlwerkstoff trägt zu einer axial kompakten axialen Baugröße bei, wobei durch den Stahlwerkstoff hohe Festigkeitswerte erreicht werden können. Insbesondere kann vorgesehen sein, dass die Blechdicke von zumindest einem der Bauteile Grundkörper, erster Spannarm und zweiter Spannarm geringer ist als ein Drahtdurchmesser der Bügelfeder, was insbesondere für Federn aus Rundmaterial gilt, beziehungsweise als eine maximale axiale Erstreckung des Federmaterials der Bügelfeder, was insbesondere für Federn aus Flachmaterial gilt. Hiermit kann ein besonders flacher Aufbau erreicht werden, wobei die gesamte axiale Länge des Grundkörpers kürzer gestaltet sein kann, als das Dreifache des Drahtdurchmessers der Bügelfeder.

Vorzugsweise werden alle drei Bauteile, das heißt der Grundkörper und die beiden Spannarme aus Stahl hergestellt, und zwar insbesondere in Sandwich-Bauweise. Hierfür kann vorgesehen sein, dass der Grundkörper einen Flanschabschnitt, einen Hülsenabschnitt und einen Deckelabschnitt aufweist, die einen Aufnahmeraum zur Lagerung des ersten und zweiten Spannarms bilden. Dabei kann der erste Spannarm radial innen einen flanschförmigen Lagerabschnitt aufweisen, der von einem Lagerelement ummantelt ist und axial gegen den Flanschabschnitt des Grundkörpers abgestützt ist. Der zweite Spannarm kann radial innen einen hülsenförmigen Lagerabschnitt aufweisen, der radial zwischen dem Hülsenabschnitt des Grundkörpers und dem ersten Spannarm angeordnet ist, sowie einen flanschförmigen Lagerabschnitt, der axial zwischen dem ersten Spannarm und dem Deckelabschnitt des Grundkörpers angeordnet ist.

Der erste und der zweite Spannarm haben jeweils einen ringfömigen Lagerabschnitt, der im Gehäuse um die jeweilige Schwenkachse drehbar gelagert ist. Die beiden Spannarme sind individuell schwenkbar, das heißt gegenüber dem Gehäuse und gegenüber dem jeweils anderen Spannarm. Die beiden Spannarme können gegenüber dem Gehäuse anschlaglos, das heißt um über 360° gedreht werden. An den sich gegeneinander bewegbaren Teilen sind Flächenpaarungen gebildet, welche mittels geeigneter Lagermittel reibungsarm gegeneinander axial beziehungsweise radial abgestützt sind. Es ist vorgesehen, dass zumindest zwischen einer der Flächenpaarungen, die zwischen dem Grundkörper und dem zweiten Spannarm, zwischen dem zweiten Spannarm und dem ersten Spannarm, sowie zwischen dem ersten Spannarm und dem Grundkörper gebildet sind, eine Ringdichtung vorgesehen ist. Die zumindest eine Ringdichtung verhindert ein ungewünschtes Eindringen von Schmutz in die Riemenspannvorrichtung.

Die Ringdichtungen können gemäß einem von folgendem hergestellt sein: aus zwei-komponenten-Kunststoff-Spritzguss, welcher an zumindest eines der Teile Grundkörper, erster Spannarm, zweiter Spannarm angespritzt ist, oder als Einzelbauteil, das mit zumindest einem der Teile Grundkörper, erster Spannarm, zweiter Spannarm verbunden ist, beispielsweise stoffschlüssig durch Anvulkanisieren.

Der Grundkörper, welcher vorzugsweise als Stahlbauteil gestaltet ist, hat einen Befestigungsabschnitt zum Befestigen der Riemenspannvorrichtung an einem ortsfesten Bauteil, beispielsweise dem Aggregat oder Motorgehäuse. Der Befestigungsabschnitt kann flanschartig von dem die Öffnung umgebenden Hülsen- oder Ringabschnitt, durch den die Antriebswelle geführt ist, abstehen. Günstig ist es, wenn der Befestigungsabschnitt mehrere Befestigungspunkte hat, an denen der Grundkörper mit dem Aggregat verbunden werden kann. Diese Befestigungspunkte können beispielsweise in Form von Flanscherweiterungen des Grundkörpers gestaltet sein, welche vom Ringabschnitt nach radial außen abstehen. Die genannten Befestigungsmittel liegen vorzugsweise zumindest in dem Umfangsbereich, der den Spannarmen und dem von der Riemenscheibe wegführenden Antriebsriemen etwa gegenüberliegen. Für eine zuverlässige Befestigung der Riemenspannvorrichtung an dem Aggregat ist es günstig, wenn die Befestigungsmittel in Axialansicht auf die Riemenspannvorrichtung über einen Umfangsabschnitt von mehr als 90° und weniger als 270°, insbesondere von etwa 150° bis 210° erstrecken.

Nach einer ersten Möglichkeit ist die Riemenspannvorrichtung so gestaltet, dass die Lagerung der Spannarme im Bereich zwischen dem Befestigungsabschnitt des Grundkörpers und der Riemenebene liegt. Dies gilt auch für die Federanordnung, welche die Spannarme gegeneinander vorspannt, welche ebenfalls zwischen der Mittelebene des Riemens und dem Befestigungsabschnitt liegt. Die Riemenebene entspricht etwa der Lagermittelebene, welche durch die Lager der Spannrollen an den Spannarmen definiert ist. Eine zweite Lagermittelebene ist durch die Lager der Spannarme an dem Grundkörper gebildet.

Nach einer zweiten Möglichkeit ist die Riemenspannvorrichtung so gestaltet, dass die Lagerung der Spannarme am Grundkörper von dem Aggregat aus betrachtet hinter der Riemenebene liegt. Hiermit ist gemeint, dass eine Mittelebene der Spannarmlagerung gegenüber der Mittelebene des Riemens in Richtung von dem Aggregat weg axial versetzt angeordnet ist. Die zweite Lagermittelebene und die Befestigungsmittel zum Befestigen des Grundkörpers sind bei dieser Möglichkeit auf unterschiedlichen Seiten der ersten Lagermittelebene der Spannrollen angeordnet.

Bevorzugte Ausführungsbeispiele werden nachstehend anhand der Zeichnungsfiguren erläutert. Hierin zeigt
- Figur 1: eine erfindungsgemäße Riemenspannvorrichtung in einer ersten Ausführungsform in perspektivischer Ansicht von der Seite;
- Figur 2: die Riemenspannvorrichtung gemäß Figur 1 im Längsschnitt;
- Figur 3: die Lageranordnung der Riemenspannvorrichtung gemäß Figur 1 als Detail im Halblängsschnitt;
- Figur 4: eine Lageranordnung als Detail einer erfindungsgemäßen Riemenspannvorrichtung in einer abgewandelten Ausführung;
- Figur 5: die Riemenspannvorrichtung gemäß Figur 1 in perspektivischer Darstellung in montiertem Zustand an einem Aggregat;
- Figur 6: die Riemenspannvorrichtung gemäß Figur 1 in Seitenansicht in montiertem Zustand an einem Aggregat;
- Figur 7: eine erfindungsgemäße Riemenspannvorrichtung in einer weiteren Ausführungsform in Seitenansicht in montiertem Zustand an ein Aggregat;
- Figur 8: eine erfindungsgemäße Riemenspannvorrichtung in einer weiteren Ausführungsform in montiertem Zustand an ein Aggregat in perspektiver Ansicht;
- Figur 9: eine erfindungsgemäße Riemenspannvorrichtung in einer weiteren Ausführungsform in perspektiver Ansicht;
- Figur 10: die Federanordnung der Riemenspannvorrichtung gemäß Figur 9 als Detail in perspektiver Ansicht;
- Figur 11: eine erfindungsgemäße Riemenspannvorrichtung in einer weiteren Ausführungsform in perspektiver Ansicht;
- Figur 12: die Federanordnung der Riemenspannvorrichtung gemäß Figur 11 als Detail in Draufsicht; und
- Figur 13: die Federanordnung der Riemenspannvorrichtung gemäß Figur 11 als Detail in Seitenansicht.

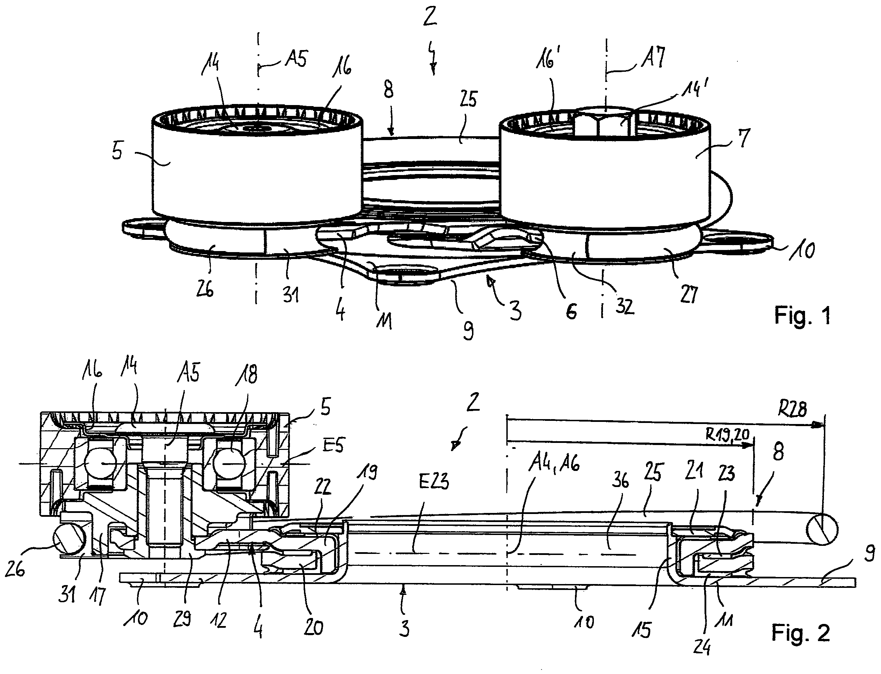

Die Figuren 1 bis 5, welche im Folgenden gemeinsam beschrieben werden, zeigen eine erfindungsgemäße Riemenspannvorrichtung 2 in einer ersten Ausführungsform. Die Riemenspannvorrichtung 2 umfasst einen Grundkörper 3, einen ersten Spannarm 4 mit einer ersten Spannrolle 5, einen zweiten Spannarm 6 mit einer zweiten Spannrolle 7 und eine Federanordnung 8, über welche die beiden Spannarme 4, 6 in Drehrichtung gegeneinander federnd abgestützt sind.

Der Grundkörper 3 kann an einem ortsfesten Bauteil wie einem Aggregat befestigt werden. Das Aggregat kann prinzipiell jede Maschine sein, die Teil des Riementriebes ist, das heißt insbesondere jedes der vom Hauptmotor des Kraftfahrzeugs angetriebenen Nebenaggregate wie Generator, Wasserpumpe oder dergleichen. Zur Verbindung mit dem ortsfesten Bauteil hat der Grundkörper 3 einen Befestigungsabschnitt 9, insbesondere mit drei über den Umfang verteilten nach radial außen vorstehende Flanschvorsprüngen 10 mit Bohrungen, durch die Schrauben zur Befestigung an dem ortsfesten Bauteil durchgesteckt werden können. Die Riemenspannvorrichtung 2 gemäß der vorliegenden Ausführungsform ist so gestaltet, dass die Lagerung 22, 23, 24 der Spannarme 4, 6 axial zwischen dem Befestigungsabschnitt 9 des Grundkörpers 3, und einer mittleren Rollenebene E5 der Spannrollen 5, 7 liegt, welche in montiertem Zustand etwa einer durch den Riemen aufgespannten Riemenebene entspricht.

Der Grundkörper 3 hat ferner einen radial innen an den Befestigungsabschnitt 9 anschließenden Flanschabschnitt 11, der zur axialen Abstützung des zweiten Spannarms 6 dient. Der Flanschabschnitt 11 geht radial innen in einen Hülsenabschnitt 15 über, an dem der erste beziehungsweise zweite Spannarm 4, 6 radial gelagert ist. Am freien Ende des Hülsenabschnitts 15 ist eine Ringscheibe 21 als Abschluss fixiert. Dies erfolgt vorliegend durch Umbördeln eines endseitigen Randes des Hülsenabschnitts 15, wobei andere Befestigungsmethoden ebenso denkbar sind. Die Ringscheibe 21 bildet eine Stützfläche zur axialen Abstützung des ersten beziehungsweise zweiten Spannarms 4, 6. Insgesamt bilden die Ringscheibe 21, der Hülsenabschnitt 15 und der Flanschabschnitt 11 eine im Halblängsschnitt etwa C-förmige Aufnahme für die beiden Spannarme 4, 6.

Der Grundkörper 3, der erste Spannarm 4 und der zweite Spannarm 6 sind vorliegend als Stahlbauteile ausgeführt, welche insbesondere umformend aus Blech hergestellt werden können. Stahlbauteile haben den Vorteil einer hohen Festigkeit bei niedrigem Materialeinsatz, so dass insbesondere die Spannarme 4, 6 axial flach ausgeführt werden können. Für alle drei Bauteile Grundkörper 3sowie erster und zweiter Spannarm 4, 6 gilt, dass deren Blechdicke jeweils geringer ist als der Drahtdurchmesser d der Bügelfeder 25. Die Blechdicke der Spannarme 4, 6 ist etwas dicker als die Blechdicke des Grundkörpers 3. Die gesamte axiale Länge L3 des Grundkörpers 3 kann somit kürzer gestaltet sein als das Dreifache des Drahtdurchmessers d der Bügelfeder 25 (L3 < 3d).

Der erste Spannarm 4 ist mittels des ersten Lagers 22 um eine erste Schwenkachse A4 schwenkbar gelagert. Der zweite Spannarm 6 ist mittels des zweiten Lagers 24 um eine zweite Schwenkachse A6 schwenkbar gelagert. Vorliegend sind die beiden Lager 22, 24 koaxial zueinander angeordnet, das heißt die beiden Schwenkachsen A4, A6 fallen zusammen. Grundsätzlich ist es jedoch für bestimmte Anwendungen auch denkbar, dass die beiden Schwenkachsen parallel beziehungsweise exzentrisch zueinander angeordnet sein können. Die sich in Umfangsrichtung um die Schwenkachsen A4, A6 erstreckende Federanordnung 8 wirkt einer relativen Schwenkbewegung der beiden Spannarme 4, 6 entgegen. Die beiden Spannarme 4, 6 sind durch die zwischengeschaltete Federanordnung 8 relativ zueinander begrenzt drehbar und zusammen mit der Federanordnung 8 gegenüber dem Grundkörper um die Achsen A4, A6 frei drehbar, das heißt um 360° und mehr. In an dem ortsfesten Bauteil montiertem Zustand ist diese freie Drehbarkeit nur insoweit gegeben wie es die Einbaulage zulässt. Es ist vorgesehen, dass die Schwenkachsen A4, A6 in montiertem Zustand der Riemenspannvorrichtung 2 innerhalb einer Öffnung 36 des Grundkörpers 3 liegen.

Die Spannarme 4, 6 haben jeweils einen Trägerabschnitt 12, 13, der von einem ringförmigen Lagerabschnitt 19, 20 des jeweiligen Spannarms 4, 6 nach radial außen vorsteht. An dem Trägerabschnitt 12, 13 ist jeweils eine zugehörige Spannrolle 5, 7 befestigt und mittels entsprechender Lager 18, 18' um zu den Schwenkachsen A4, A6 parallele Drehachsen A5, A7 drehbar gelagert. Das Lager 18 für die erste Spannrolle 5 ist auf ein mit dem Trägerabschnitt 12 verbundenes Trägerelement 17 aufgezogen. Das Lager 18 ist mittels einer Schraube 14, die in eine am Trägerabschnitt abgestützte Gewindehülse 29 eingeschraubt ist, verspannt. Die zweite Spannrolle 7 ist in analoger Form auf einem Lagerelement des zweiten Spannarms 6 drehbar gelagert und mittels einer Schraubverbindung 14' an dem Spannarm 6 befestigt. Scheiben 16, 16' verhindern das Eindringen von Schmutz in die Lager 18, 18' der Spannrollen 5, 7.

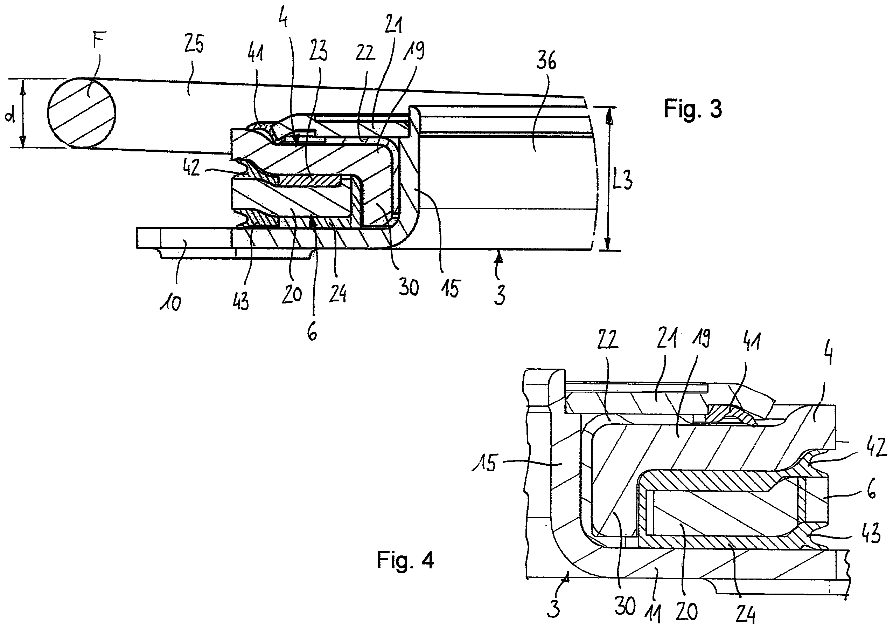

Im Folgenden wird näher auf die Lageranordnung der Riemenspannvorrichtung eingegangen, welche als Detail in Figur 3 gezeigt ist. Der erste Spannarm 4 hat radial innen einen Lagerabschnitt 19 zur drehbaren Lagerung an dem Grundkörper 3. Der zweite Spannarm 5 hat einen Lagerabschnitt 20 zur drehbaren Lagerung relativ zum ersten Lagerabschnitt 19 beziehungsweise zum Grundkörper 3. Es ist erkennbar, dass der erste Lagerabschnitt 19 und der zweite Lagerabschnitt 20 axial und radial gegeneinander gelagert sind. Der erste Lagerabschnitt 19 ist mittels des ersten Lagers 22 in dem Gehäuse 3 drehbar gelagert. Das erste Lager 22 ist insbesondere in Form eines im Querschnitt L-förmigen Gleitrings gestaltet, welcher eine axiale und radiale Lagerung für den ersten Spannarm 4 gegenüber dem Grundkörper 3 bildet. Das erste Lager 22 ist axial gegen die Ringscheibe 21 abgestützt, welche mit dem Hülsenabschnitt 15 fest verbunden ist. Radial innen hat das erste Lager 22 einen hülsenförmigen Lagerabschnitt, der radial zwischen dem Hülsenabschnitt 15 des Grundkörpers 3 und einem Hülsenansatz 30 des ersten Spannarms 4 angeordnet ist.

Zwischen dem ersten und zweiten Lagerabschnitt 19, 20 ist ein Axiallager 23 vorgesehen, das insbesondere in Form einer Gleitscheibe gestaltet ist. Der zweite Lagerabschnitt 20 ist über ein zweites Lager 24, das insbesondere in Form eines L-förmigen Gleitrings gestaltet ist, gegenüber dem Grundkörper 3 axial und gegenüber dem Hülsenansatz 30 des Lagerabschnitts 19 radial abgestützt. Die Montage erfolgt derart, dass die Lageranordnung bestehend aus zweitem Lager 24, zweitem Spannarm 6, Axiallager 23, erstem Spannarm 4 und erstem Lager 22 auf den Hülsenansatz 15 aufgeschoben wird. Dann wird die Ringscheibe 21 auf den Hülsenabschnitt 15 aufgeschoben und anschließend der endseitige Bund des Hülsenabschnitts 15 umgebördelt. In montiertem Zustand liegen die Spannarme 4, 6 axial zwischen dem Befestigungsabschnitt 11 und der Ringscheibe 21. Die axiale Länge des Grundkörpers 3 beziehungsweise des Hülsenabschnitts 15 ist kleiner als das Dreifache des Federdrahtdurchmessers d der Bügelfeder 25, so dass der axiale Bauraum besonders gering ist.

Zwischen den jeweils zueinander drehbaren Bauteilen 3, 4, 6, ist jeweils eine Ringdichtung 41, 42, 43 angeordnet, welche ein ungewünschtes Eindringen von Schmutz in die Lager verhindern. Eine erste Ringdichtung 41 ist an einem radial äußeren Ende der Abschlussscheibe 21 angespritzt und dichtet den Ringraum zwischen der Gehäusescheibe 21 und dem Lagerabschnitt 19 des ersten Spannarms 4 ab. Eine mittlere Ringdichtung 42 ist mit einem radial äußeren Rand des zweiten Lagers 23 verbunden und dichtet den Ringraum zwischen den beiden Spannarmen 4, 6 ab. Der Ringspalt zwischen dem Lagerabschnitt 20 des zweiten Spannarms 6 und dem Flanschabschnitt 11 des Gehäuses 3 ist mit einer zweiten Ringdichtung 43 abgedichtet, die mit einem radial äußeren Rand des ersten Lagers 22 verbunden ist. Das zweite Lager 24 kann mit der zweiten Ringdichtung 43 gemeinsam mittels Zweikomponenten-Kunststoff-Spritzguss hergestellt werden. Dies gilt entsprechend auch für das mittlere Lager 23 mit mittlerer Dichtung 42.

In Figur 4 ist eine leicht abgewandelte Ausführung der Lageranordnung gezeigt, welche weitestgehend der Lageranordnung aus Figur 3 entspricht, auf deren Beschreibung hinsichtlich der Gemeinsamkeiten insofern Bezug genommen wird. Im Unterschied zur Ausführung nach Figur 3 ist bei der Ausführung nach Figur 4 die erste Dichtung 41 axial zwischen der Ringscheibe 21 und einer Ringfläche des Lagerabschnitts 19 angeordnet. Die Dichtung 41 ist mit einer Unterseite der Ringscheibe 21 stoffschlüssig verbunden, beispielsweise durch Anvulkanisieren oder Kleben. Die mittlere Dichtung 42 und die zweite Dichtung 43 sind einteilig mit dem zweiten Lager 24 ausgebildet, was beispielsweise mittels Zwei-Komponenten-Spritzguss erfolgen kann. Das erste Lager 22 ist im Querschnitt C-förmig gestaltet. Dies kann durch Umformen einer Lagerhülse an einem unteren und oberen Ende erfolgen.

Die Federanordnung 8 umfasst zumindest eine Bügelfeder 25, welche mit einem ersten Stützabschnitt 26 an dem ersten Spannarm 4 und mit einem zweiten Stützabschnitt 27 an dem zweiten Spannarm in Umfangsrichtung abgestützt ist. Die Stützabschnitte 26, 27 bilden die Enden der Bügelfeder 25 und können daher auch als Endabschnitte bezeichnet werden. Die Endabschnitte sind bogenförmig gestaltet und greifen in entsprechende Umfangsnuten eines jeweils mit dem zugehörigen Spannarm 4, 6 verbundenen Stützelements 31, 32 ein. Die Stützelemente 31, 32 sind jeweils von unten auf das zugehörige Trägerelement 17 des Spannarms 4, 6 aufgesteckt. Durch den formschlüssigen Eingriff der Endabschnitte 26, 27 in den zugehörigen Stützelementen 31, 32 wird die Bügelfeder 25 in axialer Richtung und in Umfangsrichtung fixiert. Zwischen den beiden Stützabschnitten 26, 27 erstreckt sich der freie Federabschnitt 28 der Bügelfeder 25, in dem beim Aufweiten der Feder potentielle Energie gespeichert wird. Die Bügelfeder 25 ist in Bezug auf eine sich zwischen den beiden Endabschnitte erstreckende Mittelebene spiegelsymmetrisch gestaltet.

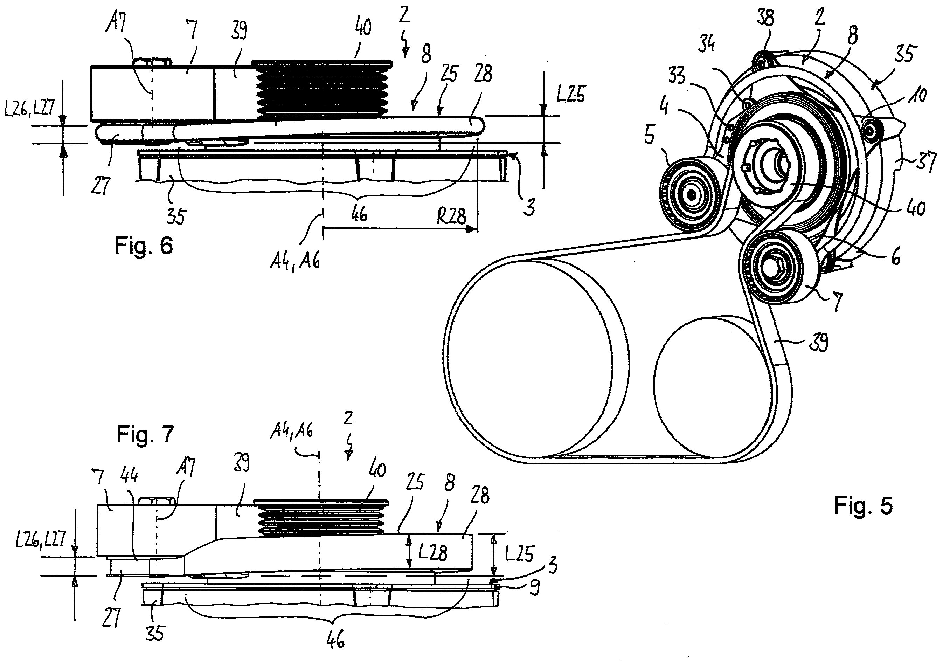

Es ist insbesondere in Figur 5 erkennbar, dass die Bügelfeder 25 eine Umfangserstreckung von weniger als 360° um die erste und zweite Schwenkachse A4, A6 aufweist. Dabei ist ein mittlerer Radius R28 des Federabschnitts 28 der Bügelfeder 25 größer ist als ein größter Radius der Lager 22, 23, 24 für die Spannarme 4, 6 beziehungsweise größer als ein größter Radius R19, R20 der ringförmigen Lagerabschnitte 19, 20 der beiden Spannarme 4, 6. Es ist insbesondere in Figur 6 erkennbar, dass die axiale Gesamtlänge L25 der Bügelfeder 25 größer ist als die axiale Länge L26, L27 der Bügelfeder im Bereich der Spannrollen 4, 6, beziehungsweise im Bereich der Stützabschnitte 26, 27. Dies wird bei der vorliegenden Ausführungsform dadurch erreicht, dass ein den Spannrollen 5, 7 gegenüberliegender Teilbereich des Federabschnitts 28 gegenüber dem ersten und zweiten Stützabschnitt 26, 27 axial in Richtung vom Befestigungsabschnitt 9 des Grundkörpers 3 weg versetzt ist. Hierfür hat der Federabschnitt 28 zwischen den beiden Stützabschnitten 26, 27 in Bezug auf die Schwenkachsen A4, A6 eine axiale Steigungskomponente, was insbesondere in Figur 2 zu sehen ist. Auf diese Weise wird erreicht, dass der Federabschnitt 28 gegenüber benachbarten Bauteilen einen größeren axialen Abstand aufweist und gegenüber diesen auch bei auftretenden Vibrationen berührungslos ist. Die Bügelfeder 25 ist aus einem Rundmaterial hergestellt und hat einen gleichbleibenden Querschnitt entlang der Erstreckung der Feder.

Die Bügelfeder 25 steht im Einbauzustand unter starker Druckvorspannung in Umfangsrichtung, das heißt die Feder ist gegenüber ihrem entspannten Zustand aufgeweitet, so dass die Feder die beiden Spannarme 4, 6 in Richtung aufeinander zu beaufschlagt. Zum (vorübergehenden) Fixieren der vorgespannten Stellung werden die Spannarme 4, 6 entgegen der Vorspannkraft der Feder voneinander weg bewegt und ein Sicherungsstift in eine erste Bohrung 33 im ersten Spannarm 4 und eine zweite Bohrung 34 im zweiten Spannarm 6 eingesteckt. Nach dem Montieren der Riemenspannvorrichtung 2 an dem Aggregat 35 und Auflegen des Riemens 39 wird der Sicherungsstift gezogen, so dass die Spannarme 4, 6 von der Bügelfeder 25 in Umfangsrichtung aufeinander zu beaufschlagt werden und die Spannrollen 5, 7 den Riemen 39 vorspannen.

Die Figuren 5 und 6 zeigen die erfindungsgemäße Riemenspannvorrichtung 2 gemäß den Figuren 1 bis 4 in montiertem Zustand an ein Aggregat 35. Dabei bilden die Riemenspannvorrichtung 2 und das Aggregat 35 gemeinsam eine Aggregatanordnung. Das Aggregat 35 ist vorliegend in Form eines Generators (Lichtmaschine) gestaltet. Es ist das Gehäuse 37 des Generators erkennbar, das über Befestigungsmittel an einem Motorblock angeschlossen werden kann. Es versteht sich jedoch, dass das Aggregat auch eine andere Arbeitsmaschine sein kann, die Teil des Riementriebes ist, beispielsweise ein Nebenaggregat, wie eine Pumpe.

Die Riemenspannvorrichtung 2 ist stirnseitig an dem Generator 35 angebracht. Dies erfolgt mittels der umfangsverteilten Anschlussflansche 10, in welche Schrauben 38 eingesteckt und mit dem Gehäuse 37 des Generators 35 verschraubt werden können. Es sind ferner der endlose Riemen 39 und die Riemenscheibe 40 erkennbar, die mittels einer Schraubverbindung auf der Antriebswelle des Generators 35 drehfest verbunden werden kann.

Der Grundkörper 3 beziehungsweise die Riemenspannvorrichtung 2 ist derart gestaltet, dass - in montiertem Zustand der Riemenspannvorrichtung 2 an das Aggregat 35 - die Schwenkachsen A4, A6 der Spannarme 4, 6 innerhalb des Außendurchmessers der Antriebswelle, vorzugsweise im Wesentlichen koaxial zur Antriebsdrehachse, angeordnet ist.

Figur 7 zeigt eine erfindungsgemäße Riemenspannvorrichtung 2 in einer weiteren Ausführungsform. Die vorliegende Riemenspannvorrichtung 2 entspricht weitestgehend der Ausführungsform gemäß den Figuren 1 bis 6, so dass hinsichtlich der Gemeinsamkeiten auf die obige Beschreibung Bezug genommen wird. Dabei sind gleiche beziehungsweise abgewandelte Bauteile mit gleichen Bezugszeichen versehen, wie in den Figuren 1 bis 6.

Der Unterscheid der Ausführungsform gemäß Figur 7 liegt in der Ausgestaltung der Federanordnung 8. Die Federanordnung umfasst vorliegend eine Bügelfeder 25, die aus Flachmaterial hergestellt ist. Mit Flachmaterial ist gemeint, dass als Ausgangsmaterial ein Blechstreifen mit einem rechteckigen Querschnitt verwendet wird. Die Stützbeziehungsweise Endabschnitte 26, 27, der Bügelfeder 25, welche an den Spannarmen 4, 6 abgestützt sind, haben eine geringere axiale Länge L26 als die axiale Gesamtlänge L25 der Bügelfeder 25 und als die axiale Länge L28 des Federabschnitts 28. Dies kann dadurch bewerkstelligt werden, dass der Blechstreifen vor dem Umformen zur Bügelfeder an seinen Endabschnitten entsprechend beschnitten wird, so dass in diesen Bereichen Ausnehmungen 44 entstehen. Diese Ausnehmungen 44 bieten Raum für die Spannrollen 5, 7, so dass der axiale Aufbau insgesamt gering ist. Der Federabschnitt 28 hat ausgehend von den Endabschnitten 26, 27 in Umfangsrichtung eine axiale Steigungskomponente, so dass ein mittlerer Teilabschnitt des Federabschnitts 28 einen maximalen axialen Abstand von dem Befestigungsteil 9 hat. Im Übrigen entspricht die vorliegende Ausführungsform der oben beschriebenen Ausführung, auf deren Beschreibung hinsichtlich weiterer Einzelheiten insofern Bezug genommen wird.

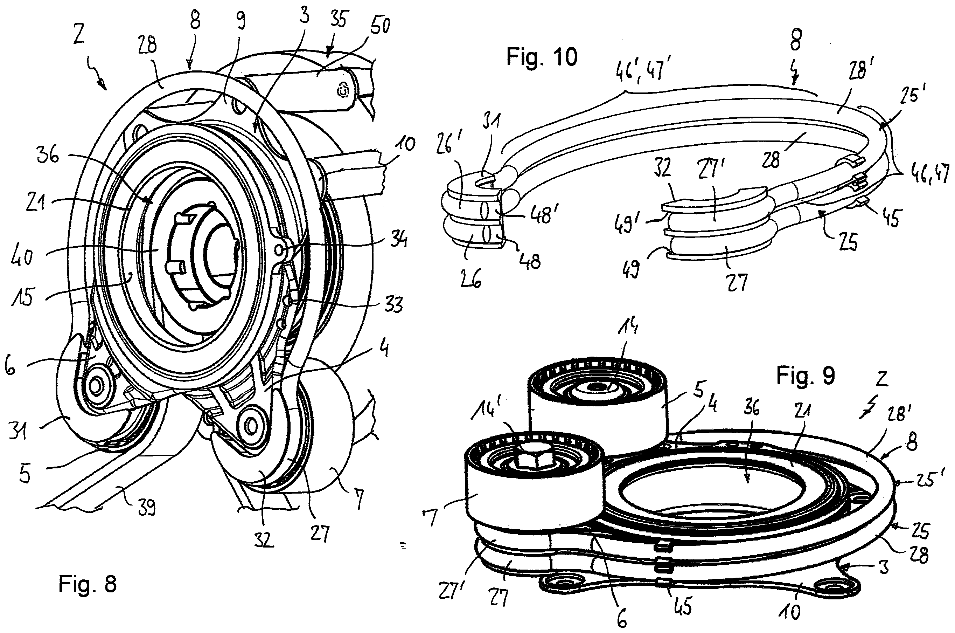

Die Figur 8 zeigt eine erfindungsgemäße Riemenspannvorrichtung 2 in einer weiteren Ausführungsform. Diese entspricht in weiten Teilen der Ausführungsform gemäß den Figuren 1 bis 6, so dass hinsichtlich der Gemeinsamkeiten auf die obige Beschreibung Bezug genommen wird. Dabei sind gleiche beziehungsweise abgewandelte Bauteile mit gleichen Bezugsziffern versehen, wie bei der Ausführungsform gemäß den Figuren 1 bis 6. Im Folgenden werden hauptsächlich die Unterschiede der vorliegenden Ausführungsformen erläutert.

Bei der Ausführungsform gemäß Figur 8 ist die Riemenspannvorrichtung 2 so gestaltet, dass die Lagerung der Spannarme 4, 6 am Grundkörper 3 aus Sicht des Aggregats 35 hinter der Riemenebene liegt. Hiermit ist gemeint, dass eine Mittelebene der Lagerung der Spannarme 4, 6 am Grundkörper 3 gegenüber einer Mittelebene E5 der Spannrollen 5, 7 beziehungsweise des Riemens 39 axial in Richtung vom Aggregat weg versetzt angeordnet ist. Als Riemenebene ist die Ebene definiert, welche durch die Riemenmitte in montiertem Zustand aufgespannt wird. Der Grundkörper 3 wird mit seinem Befestigungsabschnitt 9 mittels Zwischenelementen 50 mit dem Gehäuse 35 des Aggregats verbunden.

Die Figuren 9 und 10, welche im Folgenden gemeinsam beschrieben werden, zeigen eine erfindungsgemäße Riemenspannvorrichtung 2 beziehungsweise eine Federanordnung 8 in einer weiteren Ausführungsform. Die vorliegende Riemenspannvorrichtung 2 entspricht weitestgehend der Ausführungsform gemäß den Figuren 1 bis 6, so dass hinsichtlich der Gemeinsamkeiten auf die obige Beschreibung Bezug genommen wird. Dabei sind gleiche beziehungsweise abgewandelte Bauteile mit gleichen Bezugszeichen versehen, wie in den Figuren 1 bis 6.

Eine Besonderheit der vorliegenden Ausführungsform besteht in der Ausgestaltung der Federanordnung 8. Die Federanordnung umfasst vorliegend zwei Bügelfedern 25, 25', die untereinander gleich gestaltet und parallel zueinander angeordnet sind. Jede der zwei Bügelfedern 25, 25' ist so gestaltet wie bei der Ausführungsform gemäß den Figuren 1 bis 6. Die beiden Bügelfedern 25, 25' sind mittels eines oder mehreren Befestigungselementen 45 unter Ausbildung eines axialen Spalts miteinander verbunden. Die Endabschnitte 26, 27; 26', 27' sind in Stützelementen 31, 32 aufgenommen, welche jeweils zwei bogenförmige Nuten aufweisen. Die Stützelemente 31, 32 sind wie bei der Ausführungsform gemäß den Figuren 1 bis 6 mit dem jeweiligen Spannarm 4, 6 verbunden. Durch die Ausgestaltung mit zwei Bügelfedern 25, 25' kann die auf die Spannarme 4, 6 wirkende Vorspannkraft gegenüber der Ausführung nach Figur 1 erhöht werden.

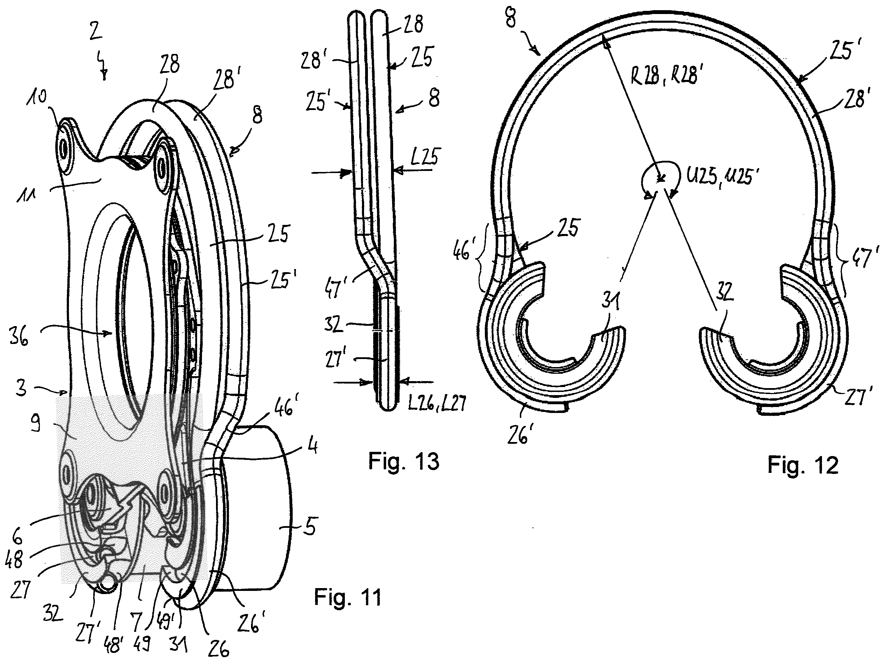

Die Figuren 11 bis 13, welche im Folgenden gemeinsam beschrieben werden, zeigen eine erfindungsgemäße Riemenspannvorrichtung 2 beziehungsweise eine Federanordnung 8 in einer weiteren Ausführungsform. Die vorliegende Riemenspannvorrichtung 2 entspricht in weiten Teilen der Ausführungsform gemäß den Figuren 1 bis 6, beziehungsweise der Ausführungsform gemäß den Figuren 9 und 10, so dass hinsichtlich der Gemeinsamkeiten auf die obige Beschreibung Bezug genommen wird. Dabei sind gleiche beziehungsweise abgewandelte Bauteile mit gleichen Bezugszeichen versehen, wie in den vorgenannten Figuren.

Eine Besonderheit der vorliegenden Ausführungsform besteht in der Ausgestaltung der Federanordnung 8. Die Federanordnung 8 umfasst vorliegend zwei Bügelfedern 25, 25', die unterschiedlich gestaltet sind. Die erste Bügelfeder 25 ist so gestaltet wie bei der Ausführungsform gemäß den Figuren 1 bis 6 und spannt eine Federebene auf. Die zweite Bügelfeder 25' ist ähnlich gestaltet, wie die erste Bügelfeder 25, wobei die Stützabschnitte 26', 27' der zweiten Bügelfeder 25' und die Stützabschnitte 26, 27 der ersten Bügelfeder 25 in einer gemeinsamen Federebene liegen, aber der Federabschnitt 28' der zweiten Bügelfeder 25' zum Federabschnitt 28 parallel versetzt ist. Hierfür hat die zweite Bügelfeder 25' zwischen den Stützabschnitten 26', 27' in Umfangsrichtung anschließende Steigungsabschnitte 46', 47', welche eine axiale Steigungskomponente haben und die in der ersten Federebene liegenden Stützabschnitte 26', 27' mit dem in der parallelen zweiten Federebene liegenden Federabschnitt 28' verbinden. Die Stützabschnitte 26, 27 der ersten Bügelfeder 25 liegen koaxial innerhalb der zweiten Stützabschnitte 26', 27' der zweiten Bügelfeder 25'. Entsprechend haben die Stützelemente 31, 32 auch zwei koaxial zueinander angeordnete Ringnuten 48, 49; 48', 49' in denen die Endabschnitte 26, 27; 26', 27' der beiden Federn 25, 25' aufgenommen sind. Die beiden Federabschnitte 28, 28' sind koaxial und axial versetzt zueinander angeordnet. Zwischen den beiden Federn 25, 25' ist über die gesamte Federlänge ein Abstand ausgebildet, so dass sich die Federn auch bei Betrieb nicht berühren.

Für alle vorstehend beschriebenen Ausführungsformen besteht ein Vorteil darin, dass die Riemenspannvorrichtung 2 aufgrund der Ausgestaltung der Bügelfeder 25, 25' mit verkürzter axialer Länge im Bereich der Spannrollen 5, 7 einen besonders flachen Aufbau in axialer Richtung hat. Die Federanordnung 8, 8' weist in den Umfangsabschnitten, in denen die Spannrollen 5, 7 angeordnet sind eine minimale axiale Bauhöhe auf. Dies trägt dazu bei, dass die Riemenspannanordnung 2 insgesamt in axiale Richtung besonders kompakt baut.

### Bezugszeichenliste

- 2: Riemenspannvorrichtung
- 3: Grundkörper
- 4: erster Spannarm
- 5: erste Spannrolle
- 6: zweiter Spannarm
- 7: zweite Spannrolle
- 8: Federanordnung
- 9: Befestigungsabschnitt
- 10: Flanschvorsprung
- 11: Flanschabschnitt
- 12: Trägerabschnitt
- 13: Trägerabschnitt
- 14: Schraube
- 15: Hülsenabschnitt
- 16: Scheibe
- 17: Zwischenelement
- 18: Lager
- 19: Lagerabschnitt
- 20: Lagerabschnitt
- 21: Ringscheibe
- 22: Lager
- 23: Lager
- 24: Lager
- 25, 25`: Bügelfeder
- 26, 26`: Stützabschnitt
- 27, 27`: Stützabschnitt
- 28, 28`: Federabschnitt
- 29: Gewindehülse
- 30: Hülsenansatz
- 31: Stützelement
- 32: Stützelement
- 33: Bohrung
- 34: Bohrung
- 35: Aggregat
- 36: Öffnung
- 37: Gehäuse
- 38: Schraube
- 39: Riemen
- 40: Riemenscheibe
- 41: Ringdichtung
- 42: Ringdichtung
- 43: Ringdichtung
- 44: Ausnehmung
- 45: Befestigungselement
- 46: Steigungsabschnitt
- 47: Steigungsabschnitt
- 48: Nut
- 49: Nut
- 50: Zwischenelement

- A: Achse
- D, d: Durchmesser
- E: Ebene
- F: Fläche
- L: Länge
- R: Radius

## Patentansprüche

1. Riemenspannvorrichtung umfassend:
einen Grundkörper (3), der einen Befestigungsabschnitt (9) zum Befestigen an einem Aggregat (35) aufweist, sowie eine Öffnung (36) für eine Antriebswelle des Aggregats;
einen ersten Spannarm (4), der mittels eines ersten Lagers (22) an dem Grundkörper (3) um eine erste Schwenkachse (A4) schwenkbar gelagert ist und eine erste Spannrolle (5) aufweist, die um eine erste Drehachse (A5) drehbar ist;
einen zweiten Spannarm (6), der mittels eines zweiten Lagers (24) an dem Grundkörper (3) um eine zweite Schwenkachse (A6) schwenkbar gelagert ist und eine zweite Spannrolle (7) aufweist, die um eine zweite Drehachse (A7) drehbar ist;
eine Federanordnung (8), welche derart zwischen dem ersten Spannarm (4) und dem zweiten Spannarm (6) angeordnet ist, dass der erste Spannarm (4) und der zweite Spannarm (6) mittels der Federanordnung (8) in Umfangsrichtung gegeneinander vorgespannt sind;
wobei die Federanordnung (8) zumindest eine Bügelfeder (25, 25') aufweist, die eine Umfangserstreckung (U25) von weniger als 360° um die erste und zweite Schwenkachse (A4, A6) aufweist,
wobei die zumindest eine Bügelfeder (25, 25') einen ersten Stützabschnitt (26, 26') aufweist, der an dem ersten Spannarm (4) abgestützt ist, und einen zweiten Stützabschnitt (27, 27'), der an dem zweiten Spannarm (6) abgestützt ist, sowie einen sich zwischen dem ersten Stützabschnitt (26, 26') und dem zweiten Stützabschnitt (27, 27') erstreckenden Federabschnitt (28, 28'),
**dadurch gekennzeichnet, dass** die zumindest eine Bügelfeder (25, 25') im Bereich des ersten und zweiten Stützabschnitts (26,27; 26` 27`) eine axiale Länge (L26, L27) aufweist, die kürzer ist als die axiale Gesamtlänge (L25) der Bügelfeder (25, 25').

2. Riemenspannvorrichtung nach Anspruch 1,
**dadurch gekennzeichnet, dass** eine Querschnittsfläche (F) der Bügelfeder (25, 25') entlang der Umfangserstreckung (U25, U25') konstant ist, wobei zumindest ein mittlerer Teilbereich des Federabschnitts (28, 28') relativ zum ersten und zweiten Stützabschnitt (26, 26') in Richtung einer von der ersten und zweiten Spannrolle (5, 7) aufgespannten Mittelebene (E5) axial versetzt ist.

3. Riemenspannvorrichtung nach Anspruch 1 oder 2,
**dadurch gekennzeichnet, dass** der Federabschnitt (28, 28') einen Steigungsbereich (46, 47; 46', 47') mit einer axialen Steigungskomponente entlang der Umfangserstreckung der Bügelfeder (25, 25') aufweist.

4. Riemenspannvorrichtung nach einem der Ansprüche 1 bis 3,
**dadurch gekennzeichnet, dass** die zumindest eine Bügelfeder (25, 25') im ersten und zweiten Stützabschnitt (26, 27; 26', 27') eine geringere axiale Länge (L26, L27) aufweist als in zumindest einem mittleren Bereich des Federabschnitts (28, 28').

5. Riemenspannvorrichtung nach einem der Ansprüche 1 bis 4,
**dadurch gekennzeichnet, dass** die Federanordnung (8) in Axialansicht spiegelsymmetrisch gestaltet ist, wobei die zumindest eine Bügelfeder (25, 25') insbesondere aus Runddraht oder Rechteckdraht hergestellt ist.

6. Riemenspannvorrichtung nach einem der Ansprüche 1 bis 5,
**dadurch gekennzeichnet, dass** die Federanordnung (8) zwei Bügelfedern (25, 25') umfasst, welche mittels zumindest einem Befestigungselement (45) miteinander verbunden sind.

7. Riemenspannvorrichtung nach Anspruch 6,
**dadurch gekennzeichnet, dass** ein erstes Stützelement (31) vorgesehen ist, mit dem die ersten Stützabschnitte (26, 26') der zwei Bügelfedern (25, 25') verbunden sind, und ein zweites Stützelement (32), mit dem die zweiten Stützabschnitte (27, 27') der zwei Bügelfedern (25, 25') verbunden sind.

8. Riemenspannvorrichtung nach einem der Ansprüche 6 oder 7,
**dadurch gekennzeichnet, dass** die zwei Bügelfedern (25, 25') gleich gestaltet sind und axial versetzt zueinander angeordnet sind.

9. Riemenspannvorrichtung nach einem der Ansprüche 6 oder 7,
**dadurch gekennzeichnet, dass** die zwei Bügelfedern (25, 25') unterschiedlich gestaltet sind, wobei die ersten und zweiten Stützabschnitte (26, 27; 26', 27') der zwei Bügelfedern (25, 25') in einer Ebene liegen, und wobei die Federabschnitte (28, 28') der zwei Bügelfedern (25, 25') zumindest in einem mittleren Teilbereich axial versetzt zueinander angeordnet sind.

10. Riemenspannvorrichtung nach Anspruch 9,
**dadurch gekennzeichnet, dass** Radien (R28, R28') der beiden Bügelfedern (25, 25') im Federabschnitt (28, 28') gleich groß sind, und Radien der Stützabschnitte (26, 26'; 27, 27') der beiden Bügelfedern (25, 25') unterschiedlich groß sind.

11. Riemenspannvorrichtung nach einem der Ansprüche 1 bis 10,
**dadurch gekennzeichnet, dass** zumindest eines der Bauteile Grundkörper (3), erster Spannarm (4) und zweiter Spannarm (6) ein Blechumformteil aus Stahlblech ist.

12. Riemenspannvorrichtung nach Anspruch 11,
**dadurch gekennzeichnet, dass** die Blechdicke von zumindest einem der Bauteile Grundkörper (3), erster Spannarm (4) und zweiter Spannarm (6) geringer ist als ein Drahtdurchmesser (d) der Bügelfeder (25, 25'), wobei die gesamte axiale Länge (L3) des Grundkörpers (3) kürzer ist als das Dreifache des Drahtdurchmessers (d) der Bügelfeder (25).

13. Riemenspannvorrichtung nach einem der Ansprüche 1 bis 12,
**dadurch gekennzeichnet, dass** zumindest zwischen einer der Flächenpaarungen, welche zwischen dem Grundkörper (3) und dem ersten Spannarm (22), zwischen dem ersten Spannarm (4) und dem zweiten Spannarm (6), sowie zwischen dem zweiten Spannarm (6) und dem Grundkörper (3) gebildet sind, eine Ringdichtung (41, 42, 43) vorgesehen ist.

14. Riemenspannvorrichtung nach Anspruch 13,
**dadurch gekennzeichnet, dass** eine der Ringdichtungen (41, 42, 43) und eines der Lager (22, 23, 24) gemeinsam mittels Zweikomponenten-Kunststoff-Spritzguss hergestellt sind, und/oder,
dass eine der Ringdichtungen (41, 42, 43) und eines der Bauteile Grundkörper (3), erster Spannarm (4), zweiter Spannarm (6) miteinander verbunden sind, insbesondere durch Anvulkanisieren.

15. Riemenspannvorrichtung nach einem der Ansprüche 1 bis 14,
**dadurch gekennzeichnet, dass** eine erste Lagermittelebene (E5) durch die Lager (18) der Spannrollen (5, 7) an den Spannarmen (4, 6) gebildet ist, und eine zweite Lagermittelebene (E23) durch die Lager (22, 23, 24) der Spannarme (4, 6) an dem Grundkörper (3) gebildet ist,
wobei die erste Lagermittelebene (E5) und der Befestigungsabschnitt (9) zum Befestigen des Grundkörpers (3) auf unterschiedlichen Seiten der zweiten Lagermittelebene (E23) angeordnet sind, oder
wobei die zweite Lagermittelebene (E23) und der Befestigungsabschnitt (9) zum Befestigen des Grundkörpers (3) auf unterschiedlichen Seiten der ersten Lagermittelebene (E5) angeordnet sind.

## Claims

1. Belt tensioning device comprising:
a base member (3) that has an attachment portion (9) for being attached to an accessory (35), and an opening (36) for a drive shaft of the accessory;
a first tensioning arm (4) that is pivotably supported on the base member (3) around a first pivot axis (A4) by a first bearing (22) and has a first tensioning roller (5) that is rotatable around a first axis of rotation (A5);
a second tensioning arm (6) that is pivotably supported on the base member (3) around a second pivot axis (A6) by a second bearing (24) and has a second tensioning roller (7) that is rotatable around a second axis of rotation (A7);
a spring arrangement (8) that is arranged between the first tensioning arm (4) and the second tensioning arm (6) such, that the first tensioning arm (4) and the second tensioning arm (6) are pretensioned in circumferential direction relative to each other by the spring arrangement (8);
wherein the spring arrangement (8) comprises at least one bow spring (25, 25') that has a circumferential extension (U25) of less than 360° around the first and the second pivot axis (A4, A6),
wherein the at least one bow spring (25, 25') has a first support portion (26, 26') that is supported on the first tensioning arm (4), and a second support portion (27, 27') that is supported on the second tensioning arm (6), as well as a spring portion (28, 28') extending between the first support portion (26, 26') and the second support portion (27, 27'),
wherein the at least one bow spring (25, 25') has an axial length (L26, L27) in the area of the first and the second support portion (26, 27; 26', 27'), which axial length (L26, L27) is shorter than a total axial length (L25) of the bow spring (25, 25').

2. Belt tensioning device according to claim 1,
**characterised in**
**that** a cross-sectional area (F) of the bow spring (25, 25') is constant along the circumferential extension (U25, U25'), wherein at least a central region of the spring portion (28, 28') is axially offset relative to the first and the second support portion (26, 26') in direction towards a centre plane (E5) formed by the first and the second tensioning roller (5, 7).

3. Belt tensioning device according to claim 1 or 2,
**characterised in**
**that** the spring portion (28, 28') has a gradient region (46, 47; 46', 47') with an axial gradient component along the circumferential extension of the bow spring (25, 25').

4. Belt tensioning device according to one of claims 1 to 3,
**characterised in**
**that** the at least one bow spring (25, 25') has a smaller axial length (L26, L27) in the first and the second support portion (26, 27; 26', 27') than at least in a central region of the spring portion (28, 28').

5. Belt tensioning device according to one of claims 1 to 4,
**characterised in**
**that** the spring arrangement (8) is formed mirror-symmetrically in an axial view, wherein the at least one bow spring (25, 25') is produced from a round wire or rectangular wire in particular.

6. Belt tensioning device according to one of claims 1 to 5,
**characterised in**
**that** the spring arrangement (8) comprises two bow springs (25, 25'), which are connected to each other by at least one connection element (45).

7. Belt tensioning device according to claim 6,
**characterised in**
**that** a first support element (31) is provided with which the first support portions (26, 26') of the two bow springs (25, 25') are connected to, and a second support element (32) with which the second support portions (27, 27') of the two bow springs (25, 25') are connected to.

8. Belt tensioning device according to one of claims 6 or 7,
**characterised in**
**that** the two bow springs (25, 25') are formed identically and are arranged axially offset to each other.

9. Belt tensioning device according to one of claims 6 or 7,
**characterised in**
**that** the two bow springs (25, 25') are formed differently, wherein the first and second support portions (26, 27; 26', 27') of the two bow springs (25, 25') are arranged in one plane, and wherein the spring portions (28, 28') of the two bow springs (25, 25') are arranged axially offset to each other at least in a central region.

10. Belt tensioning device according to claim 9,
**characterised in**
**that** the two bow springs (25, 25') have the same radii (R28, R28') in the spring portion (28, 28'), and that the support portions (26, 26'; 27, 27') of the two bow springs (25, 25') have different radii.

11. Belt tensioning device according to one of claims 1 to 10,
**characterised in**
**that** at least one of the base member (3), the first tensioning arm (4) and the second tensioning arm (6) is a sheet metal part from sheet steel.

12. Belt tensioning device according to claim 11,
**characterised in**
**that** the sheet thickness of at least one of the components base member (3), first tensioning arm (4) and second tensioning arm (6), is less than a wire diameter (d) of the bow spring (25, 25'), wherein the total axial length (L3) of the base member (3) is shorter than three times the wire diameter (d) of the bow spring (25).

13. Belt tensioning device according to one of claims 1 to 12,
**characterised in**
**that** an annular seal (41, 42, 43) is provided at least between one of the pairs of support faces that are formed between the base member (3) and the first tensioning arm (4), between the first tensioning arm (4) and the second tensioning arm (6), as well as between the second tensioning arm (6) and the base member (3).

14. Belt tensioning device according to claim 13,
**characterised in**
**that** one of the annular seals (41, 42, 43) and one of the bearings (22, 23, 24) are manufactured jointly by two-component-injection molding, and/or,
**that** one of the annular seals (41, 42, 43) and one of the components base member (3), first tensioning arm (4), second tensioning arm (6), are connected to one another, especially by vulcanisation.

15. Belt tensioning device according to one of claims 1 to 14,
**characterised in**
**that** a first central bearing plane (E5) is formed by the bearings (18) of the tensioning rollers (5, 7) at the tensioning arms (4, 6), and that a second central bearing plane (E23) is formed by the bearings (22, 23, 24) of the tensioning arms (4, 6) on the base member (3),
wherein the first central bearing plane (E5) and the attachment portion (9) for attaching the base member (3) are arranged on different sides of the second central bearing plane (E23), or
wherein the second central bearing plane (E23) and the attachment portion (9) for attaching the base member (3) are arranged on different sides of the first central bearing plane (E5).

## Revendications

1. Dispositif tendeur de courroie, comprenant :
un corps de base (3) qui comporte un segment de fixation (9) destiné à être fixé sur un agrégat (35), ainsi qu'un orifice (36) pour un arbre d'entraînement de l'agrégat :
un premier bras de tension (4), qui à l'aide d'un premier palier (22) est logé en étant pivotant sur le corps de base (3) autour d'un premier axe de pivotement (A4) et qui comporte un galet de tension (5) qui est rotatif autour d'un premier axe de rotation (A5)
un deuxième bras de tension (6) qui au moyen d'un deuxième palier (24) est logé de manière pivotante sur le corps de base (3), autour d'un deuxième axe de pivotement (A6) et un deuxième galet de tension (7) qui est rotatif autour d'un deuxième axe de rotation (A7) ;
un agencement de ressorts (8), lequel est placé entre le premier bras de tension (4) et le deuxième bras de tension (6), de telle sorte que le premier bras de tension (4) et le deuxième bras de tension (6) soient précontraints l'un contre l'autre dans la direction périphérique, au moyen de l'agencement de ressorts (8) ;
l'agencement de ressorts (8) comportant au moins un ressort en étrier (25, 25') qui présente une étendue périphérique (U25) de moins de 360° autour du premier et du deuxième axes de pivotement (A4, A6),
l'au moins un ressort en étrier (25, 25') comportant un premier segment d'appui (26, 26') qui s'appuie sur le premier bras de tension (4) et un deuxième segment d'appui (27, 27') qui s'appuie sur le deuxième bras de tension (6), un qu'un segment à ressort (28, 28') s'étendant entre le premier segment d'appui (26, 26') et le deuxième segment d'appui (27, 27'),
**caractérisé en ce que** dans la zone des premier et deuxième segments d'appui (26, 27 ; 26', 27'), l'au moins un ressort en étrier (25, 25') présente une longueur axiale (L26, L27), qui est plus courte que la longueur axiale totale (L25) du ressort en étrier (25, 25').

2. Dispositif tendeur de courroie selon la revendication 1,
**caractérisé en ce qu'**une surface de section transversale (F) du ressort en étrier (25, 25') est constante le long de l'extension périphérique (U25, U25'), au moins une zone partielle centrale du segment de ressort (28, 28') étant axialement déportée par rapport au premier et au deuxième tronçons d'appui (26, 26') dans la direction d'un plan médian (E5) projeté par le premier et le deuxième galets de tension (5, 7).

3. Dispositif tendeur de courroie selon la revendication 1 ou la revendication 2,
**caractérisé en ce que** le tronçon de ressort (28, 28') comporte une zone en inclinaison (46, 47 ; 46', 47') avec une composante d'inclinaison axiale le long de l'extension périphérique du ressort en étrier (25, 25').

4. Dispositif tendeur de courroie selon l'une quelconque des revendications 1 à 3,
**caractérisé en ce que** dans le premier et le deuxième segments d'appui (26, 27 ; 26', 27'), l'au moins un ressort en étrier (25, 25') présente une longueur axiale (L26, L27) plus faible que dans au moins une zone centrale du tronçon à ressort (28, 28').

5. Dispositif tendeur de courroie selon l'une quelconque des revendications 1 à 4,
**caractérisé en ce qu'**en vue axiale, l'agencement de ressorts (8) est conçue en symétrie spéculaire, l'au moins un ressort en étrier (25, 25') étant fabriqué notamment en fil métallique de section circulaire ou en fil métallique de section rectangulaire.

6. Dispositif tendeur de courroie selon l'une quelconque des revendications 1 à 5,
**caractérisé en ce que** l'agencement de ressorts (8) comprend deux ressorts en étrier (25, 25'), lesquels sont assemblés l'un à l'autre au moyen d'au moins un élément de fixation (45).

7. Dispositif tendeur de courroie selon la revendication 6,
**caractérisé en ce qu'**il est prévu un premier élément d'appui (31), à l'aide duquel les premiers segments d'appui (26, 26') des deux ressorts en étriers (25, 25') sont assemblés, et un deuxième élément d'appui (32), à l'aide duquel les deuxièmes segments d'appui (27, 27') des deux ressorts en étriers (25, 25') sont assemblés.

8. Dispositif tendeur de courroie selon l'une quelconque des revendications 6 ou 7,
**caractérisé en ce que** les deux ressorts en étriers (25, 25') sont conçus à l'identique et sont placés en étant déportés en direction axiale, l'un par rapport à l'autre.

9. Dispositif tendeur de courroie selon l'une quelconque des revendications 6 ou 7,
**caractérisé en ce que** les deux ressorts en étriers (25, 25') sont conçus de manière différente, les premiers et les deuxièmes segments d'appui (26, 27 ; 26', 27') des deux ressorts en étriers (25, 25') étant placés dans un plan, et au moins dans une zone partielle centrale, les segments de ressorts (28, 28') des deux ressorts en étriers (25, 25') étant déportés en direction axiale, l'un par rapport à l'autre.

10. Dispositif tendeur de courroie selon la revendication 9,
**caractérisé en ce que** dans le segment de ressorts (28, 28'), les rayons (R28, R28') des deux ressorts en étriers (25, 25') sont de même taille et des rayons des segments d'appui (26, 26' ; 27, 27') des deux ressorts en étriers (25, 25') sont de taille différente.

11. Dispositif tendeur de courroie selon l'une quelconque des revendications 1 à 10,
**caractérisé en ce qu'**au moins l'un des éléments constitutifs corps de base (3), premier bras de tension (4) et deuxième bras de tension (6) est une pièce estampée en tôle d'acier.

12. Dispositif tendeur de courroie selon la revendication 11,
**caractérisé en ce que** l'épaisseur de tôle de l'au moins un des éléments constitutifs corps de base (3), premier bras de tension (4) et deuxième bras de tension (6) est inférieure à un diamètre (d) de fil métallique des ressorts en étriers (25, 25'), la longueur axiale (L3) totale du corps de base (3) étant plus courte que le triple du diamètre (d) du fil métallique des ressorts en étriers (25).

13. Dispositif tendeur de courroie selon l'une quelconque des revendications 1 à 12,
**caractérisé en ce qu'**au moins entre l'un des appariements de surface qui sont formés entre le corps de base (3) et le premier bras de tension (4), entre le premier bras de tension (4) et le deuxième bras de tension (6), ainsi qu'entre le deuxième bras de tension (6) et le corps de base (3), il est prévu un joint annulaire (41, 42, 43).

14. Dispositif tendeur de courroie selon la revendication 13,
**caractérisé en ce que** l'un des joints annulaires (41, 42, 43) et l'un des paliers (22, 23, 24) sont fabriqués en commun au moyen de moulage par injection plastique bi-composant et/ou
**en ce que** l'un des joints annulaires (41, 42, 43) et l'un des éléments constitutifs corps de base (3), premier bras de tension (4) et deuxième bras de tension (6) sont assemblés l'un à l'autre, notamment par vulcanisation.

15. Dispositif tendeur de courroie selon l'une quelconque des revendications 1 à 14,
**caractérisé en ce qu'**un premier plan médian de paliers (E5) est formé par les paliers (18) des galets de tension (5, 7) sur les bras de tension (4, 6), et un deuxième plan médian de paliers (E23) est formé par les paliers (22, 23, 24) des bras de tension (4, 6) sur le corps de base (3),
le premier plan médian de paliers (E5) et le segment de fixation (9) destiné à fixer le corps de base (3) étant placés sur différents côtés du deuxième plan médian de paliers (E23) ou
le deuxième plan médian de paliers (E23) et le segment de fixation (9) destiné à fixer le corps de base (3) étant placés sur différents côtés du premier plan médian de paliers (E5).
